Europäisches Patentamt

European Patent Office

Office européen des brevets

(11) Numéro de publication: **0 127 202**
**A2**

(12) **DEMANDE DE BREVET EUROPEEN**

(21) Numéro de dépôt: **84200354.3**

(22) Date de dépôt: **13.03.84**

(51) Int. Cl.³: **B 28 C 1/02**
**B 01 J 2/12**

(30) Priorité: **25.03.83 FR 8305096**

(43) Date de publication de la demande:
**05.12.84 Bulletin 84/49**

(84) Etats contractants désignés:
**AT BE CH DE FR GB IT LI LU NL SE**

(71) Demandeur: **Secail, Jean**
**Empeaux**
**F-31470 Saint Lys(FR)**

(72) Inventeur: **Secail, Jean**
**Empeaux**
**F-31470 Saint Lys(FR)**

(74) Mandataire: **Barre, Philippe**
**Cabinet Barre-Gatti-Laforgue 95 rue des Amidonniers**
**F-31069 Toulouse Cédex(FR)**

(54) **Procédé et installation de déshydratation et de transformation en granulés d'un mélange d'eau et de pâte.**

(57) L'invention concerne un procédé et une installation de déshydratation et de transformation en granulés d'un mélange d'eau et de pâte, constitué en particulier par des barbotines de céramique. Le procédé consiste: (a) à filtrer le mélange sous pression dans une enceinte à travers des surfaces filtrantes, en vue de produire un dépôt pâteux sur celles-ci, (b) à évacuer le reliquat liquide contenu dans l'enceinte, (c) à projeter par effet centrifuge les dépôts pâteux contre les parois de l'enceinte en vue de les transformer en mottes, (d) à admettre ces mottes dans une cuve tournante percée de trous et à les forcer à traverser ces derniers de façon à recueillir des particules, (e) à amener lesdites particules à rouler à l'intérieur d'une surface tubulaire inclinée tournant autour de son axe et parcourue par un flux d'air, puis à recueillir les granulés obtenus en partie basse de ladite surface tubulaire.

EP 0 127 202 A2

./...

Fig.1

# PROCEDE ET INSTALLATION DE DESHYDRATATION ET DE TRANSFORMATION EN GRANULES D'UN MELANGE D'EAU ET DE PATE

L'invention concerne un procédé et une installation permettant de déshydrater et de transformer en granulés un mélange d'eau et de pâte ; elle s'applique en particulier pour la déshydratation et la transformation en granulés de barbotines constituées par un mélange d'eau et de pâte céramique notamment argileuse.

Une des techniques de fabrication des produits en céramique (carreaux...), dite par voie humide, consiste à broyer l'argile et les divers constituants en milieu aqueux de façon à obtenir un mélange homogène liquide, appelé "barbotine". Cette technique par voie humide est préférée aux techniques par voie sèche, (consistant à réaliser le mélange des produits à l'état sec pulvérulent) du fait qu'elle permet une intégration plus facile et plus homogène des divers constituants dans l'argile de base. Les barbotines présentent en général un taux d'humidité (rapport pondéral : liquide/matières sèches) de l'ordre de 50 %.

Après préparation de ces barbotines, il est nécessaire de les déshydrater afin d'obtenir un produit ayant un taux d'humidité de l'ordre de 6 à 7 % qui se prête aux opérations ultérieures de mise en forme par pressage. Pour faciliter l'alimentation des presses et les opérations de pressage, il est intéressant que ce produit se présente sous la forme de granulés à peu près sphériques.

Un seul procédé permet actuellement d'obtenir à partir des barbotines liquides ce type de granulés ; ce procédé dit "d'atomisation" consiste à pulvériser les barbotines sous pression dans un courant d'air chaud à l'intérieur de tours d'atomisation ; les gouttelettes de barbotines entraînées dans les tourbillons d'air chaud sont déshydratées de façon extrêmement efficace et l'on récupère à la base de la tour des granulés déshydratés propres à l'alimentation des presses de mise en forme.

Toutefois, un tel procédé d'atomisation exige des consommations énergétiques considérables qui le

font progressivement abandonner par les utilisateurs.

Par ailleurs, il existe d'autres procédés pour déshydrater et raffermir les barbotines afin de permettre leur pressage ; toutefois ces procédés qui sont essentiellement de trois types (décantation-évaporation, coulage sur support absorbant et filtration) fournissent, non pas des granulés se prêtant directement au pressage, mais des gâteaux de pâte desséchée qu'il est ensuite nécessaire de broyer et re-humidifier pour obtenir un produit pressable ; en outre ces procédés présentent le défaut d'exiger une main-d'oeuvre importante et expérimentée.

La présente invention se propose d'indiquer un nouveau procédé de déshydratation permettant d'obtenir des granulés déshydratés à partir d'un mélange d'eau et de pâte ; dans le cadre de l'application sus-évoquée (déshydratation des barbotines), l'invention vise à permettre d'obtenir des granulés sphéroïdes ayant un taux d'humidité sensiblement compris entre 6 % et 16 % qui pourront, soit faire l'objet d'un séchage complémentaire, soit être directement pressés.

Quelle que soit l'application, un objectif essentiel de l'invention est de fournir un procédé qui, à la fois, soit peu consommateur d'énergie et n'exige qu'une main-d'oeuvre réduite.

A cet effet, le procédé conforme à l'invention consiste :

(a) dans une première phase, à délivrer le mélange sous pression dans une enceinte et à le filtrer par passage à travers des surfaces filtrantes en assurant une évacuation du filtrat, en vue de produire un dépôt pâteux sur lesdites surfaces filtrantes,

(b) dans une deuxième phase, à arrêter l'arrivée du mélange dans l'enceinte et à évacuer le reliquat liquide contenu dans celle-ci,

(c) dans une troisième phase, à faire tourner les surfaces filtrantes dans des conditions propres à projeter par effet centrifuge les dépôts pâteux contre des parois de l'enceinte en vue de les transformer en fragments ou mottes,

3

(d) dans une quatrième phase, à admettre lesdites mottes à l'intérieur d'une cuve, tournant sur elle-même et percée de trous, et à les forcer à traverser lesdits trous de façon à recueillir à l'extérieur de la cuve des particules,

(e) dans une cinquième phase, à amener lesdites particules à rouler à l'intérieur d'au moins une surface tubulaire inclinée, tournant autour de son axe et parcourue par un flux d'air, puis à recueillir les granulés obtenus en partie basse de ladite surface tubulaire.

Selon un mode de réalisation préféré, au cours des phases (b) et (c), on injecte dans l'enceinte de l'air comprimé chaud, qui augmente la déshydratation des dépôts pâteux, accélère l'évacuation du reliquat liquide et facilite le détachement des dépôts des surfaces filtrantes.

En outre, au cours de la phase (e), les granulés sont avantageusement soumis à l'action d'un flux d'air chaud et sec /qui est amené à circuler à contre-courant des granulés depuis la base de la surface tubulaire vers sa partie haute ; à cette action peut avantageusement être combinée l'action d'un rayonnement électromagnétique hyperfréquence auquel sont soumis les granulés à l'intérieur de la surface tubulaire.

Le procédé ci-dessus défini s'applique avec une très bonne efficacité pour déshydrater et transformer en granulés des barbotines argileuses. Dans ce cas, les phases (a), (b) et (c) sont avantageusement mises en oeuvre de façon à obtenir, au terme de ces phases, des mottes présentant un taux d'humidité (rapport pondéral liquide/matières sèches) sensiblement compris entre 18 et 20 %. On a pu constater que ce taux d'humidité permettait, au cours des phases suivantes (d) et (e), une division facile des mottes en particules et un modelage aisé de celles-ci pour obtenir des granulés de formes sphéroïdes régulières.

Dans l'application ci-dessus visée, le flux d'air chaud et/ou le rayonnement hyperfréquence prévus à la phase (e) peuvent être ajustés pour obtenir des granulés présentant un taux d'humidité final compris entre 6 % et 16 %. Suivant le cas, les granulés pourront ensuite être soit

4

0127202

directement pressés, soit subir un séchage complémentaire dans un séchoir classique à micro-ondes et/ou à air chaud pour atteindre de façon précise le taux d'humidité exigé par le pressage (de l'ordre de 6 à 7 %). Le procédé de l'invention permet ainsi d'obtenir globalement un excellent bilan énergétique et fournit des granulés qui sont faciles à manutentionner par tout moyen (vis sans fin, tapis...) sans risque d'agglomération.

L'invention s'étend à une installation pour la mise en oeuvre du procédé ci-dessus visé ; ladite installation comprend, en combinaison :

– au moins un dispositif de filtration composé d'une enceinte fermée d'axe approximativement vertical dotée d'une paroi inférieure, de plateaux superposés à toile filtrante montés rotatifs autour d'un axe sensiblement vertical, de moyens d'entraînement en rotation desdits plateaux, de moyens d'admission sous pression du mélange dans l'enceinte, de moyens d'évacuation du filtrat par le centre des plateaux, d'au moins un racleur tournant appliqué contre la paroi inférieure, de moyens d'évacuation des mottes, situés en partie basse de l'enceinte, et de moyens d'évacuation du reliquat liquide, situés en partie basse de l'enceinte,

– un dispositif, dit de démottage, composé d'une enceinte, d'une cuve montée rotative à l'intérieur de ladite enceinte et percée de trous, de moyens d'entraînement en rotation de ladite cuve, de moyens d'admission des mottes dans la cuve, d'au moins un racleur fixe appliqué contre la surface interne de la cuve, d'au moins un racleur fixe appliqué contre la surface externe de la cuve, et de moyens d'évacuation des particules de l'enceinte,

– des moyens d'acheminement des mottes entre les moyens d'évacuation du dispositif de filtration et les moyens d'admission du dispositif de démottage,

– un dispositif, dit de granulation, composé d'une enceinte d'axe incliné et de forme allongée le long de cet axe, d'un tambour de forme allongée disposé à l'intérieur de ladite enceinte et percé de trous, de moyens d'entraînement en rotation de l'enceinte et du tambour autour de l'axe incliné, de moyens d'admission des particules dans ledit tambour en partie haute de celui-ci, d'une goulotte d'évacuation des granulés en partie basse de l'enceinte, de moyens d'arrivée d'air en partie basse de l'enceinte et de moyens d'aspiration d'air en partie haute de celle-ci,

- des moyens d'acheminement des particules entre les moyens d'évacuation du dispositif de démottage et les moyens d'admission du dispositif de granulation.

D'autres caractéristiques, buts et avantages de l'invention se dégageront de la description qui suit, en référence aux dessins annexés, lesquels présentent à titre d'exemple non limitatif une installation de déshydratation conforme à l'invention ; sur ces dessins :

- la figure 1 est une vue schématique d'ensemble de cette installation,

- la figure 2 est une vue en coupe partielle par un plan vertical axial d'un dispositif de filtration équipant ladite installation,

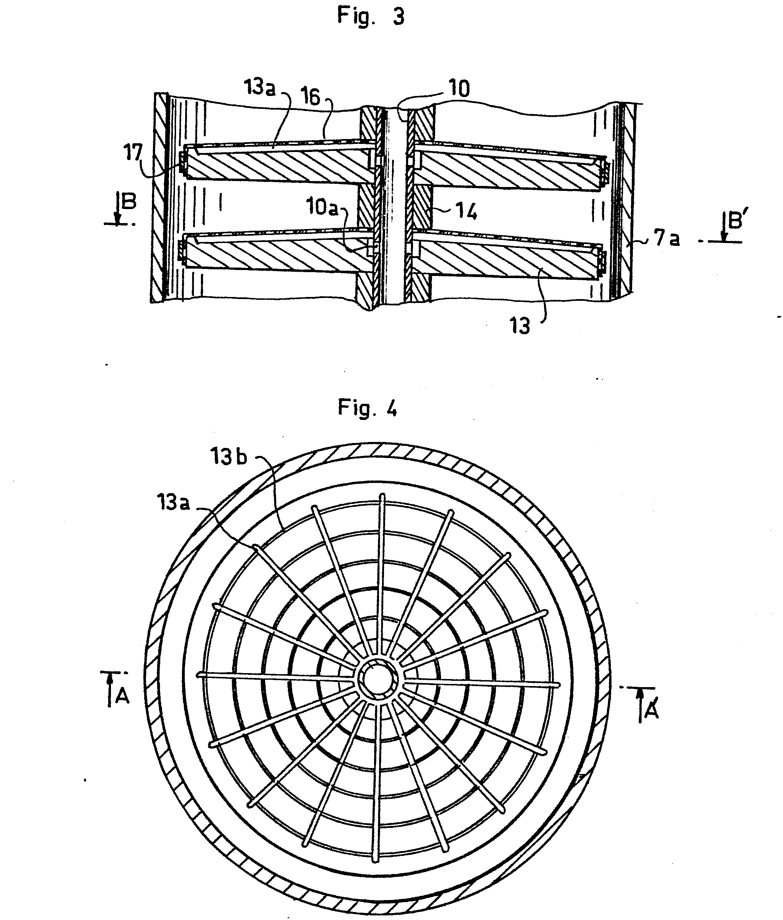

- la figure 3 est une coupe de détail par un plan vertical AA' de ce dispositif,

- la figure 4 en est une coupe par un plan horizontal BB',

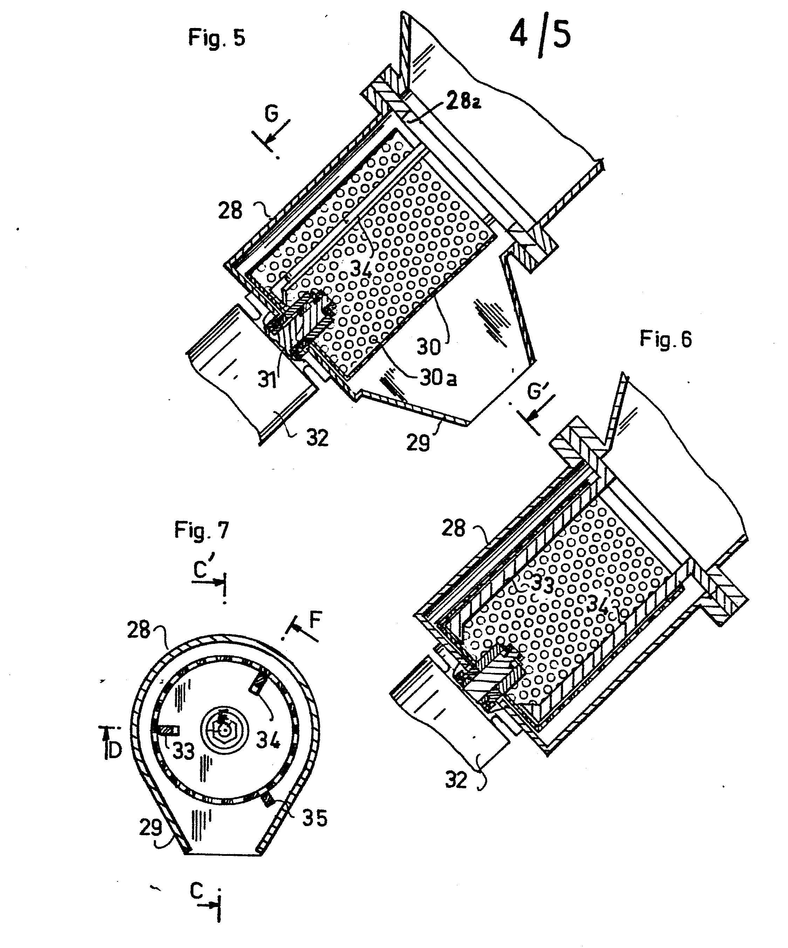

- la figure 5 est une vue en coupe par un plan vertical CC' d'un dispositif de démottage équipant ladite installation,

- la figure 6 est une coupe de ce dispositif le long d'une ligne brisée D E F,

- la figure 7 en est une coupe par un plan GG' orthogonal aux précédents,

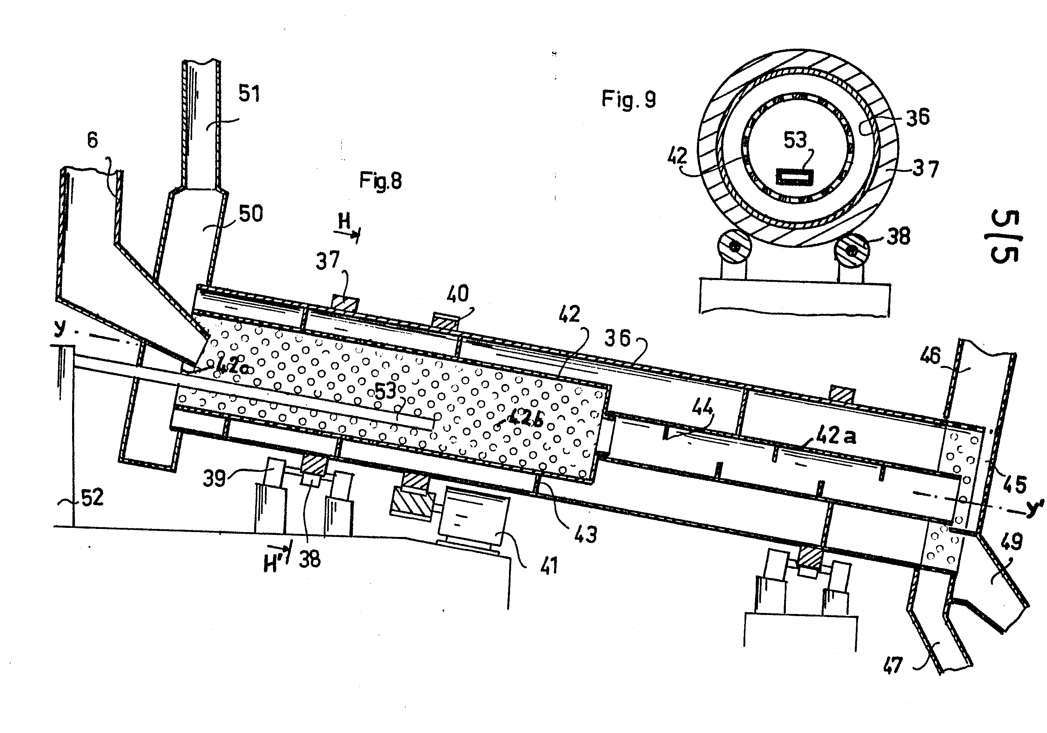

- la figure 8 est une vue en coupe par un plan vertical axial d'un dispositif de granulation équipant l'installation,

- la figure 9 en est une coupe par un plan HH' orthogonal au précédent.

L'installation représentée à titre d'exemple aux figures est destinée à traiter des barbotines liquides argileuses de taux d'humidité de l'ordre de 50 % en vue de les transformer en granulés sphéroïdes de taux d'humidité ajustable entre 6 et 16 %.

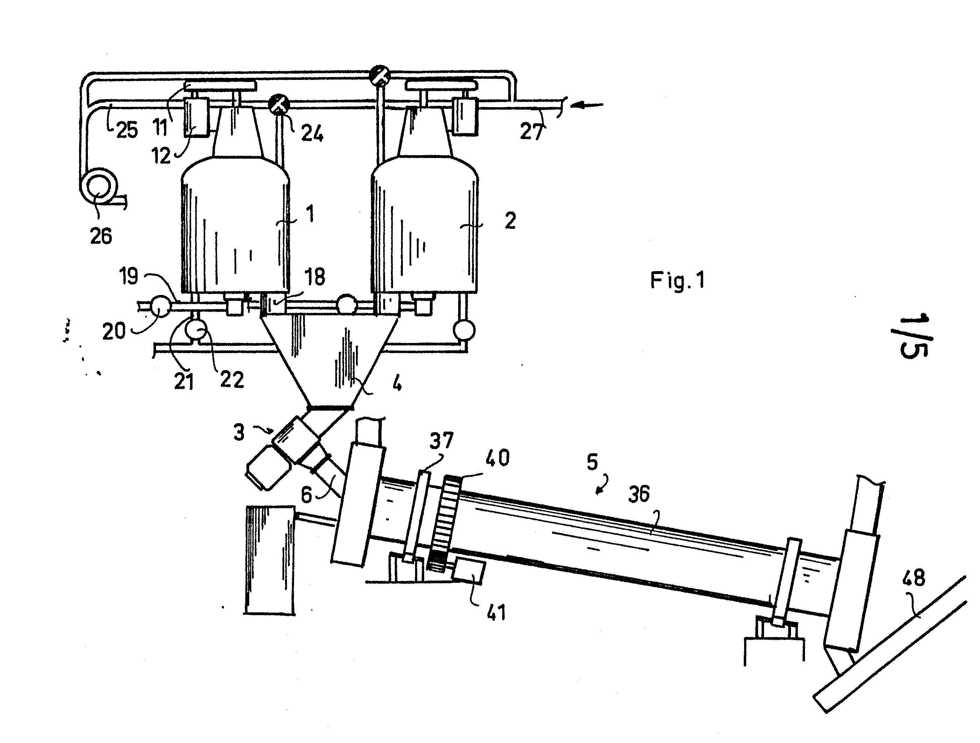

Cette installation comprend essentiellement, ainsi que le schématise la figure 1, deux dispositifs de filtration 1 et 2 disposés en parallèle, un dispositif de démottage 3 situé au-dessous des dispositifs 1 et 2, une trémie 4 agencée pour recevoir les mottes à la sortie des dispositifs 1 et 2 et pour les guider vers le dispositif 3, un dispositif de granulation 5 situé à proximité du dispositif de démottage 3 et une goulotte 6 guidant à la sortie de ce dispositif 3 les particules vers le dispositif de granulation 5.

Les deux dispositifs de filtration sont appelés, comme on l'expliquera plus loin, à travailler en séquences alternatives de façon à délivrer à leur sortie un débit de mottes à peu près continu.

Chaque dispositif de filtration comprend une enceinte cylindrique fermée 7, s'étendant le long d'un axe vertical XX'. Cette enceinte est fermée en partie basse par une paroi horizontale 8 percée d'une large lumière entourée d'un conduit 9 d'évacuation des mottes ; ce conduit est associé à une vanne-guillotine 18 de type classique, les conduits 9 des deux dispositifs de filtration débouchant en partie haute de la trémie 4.

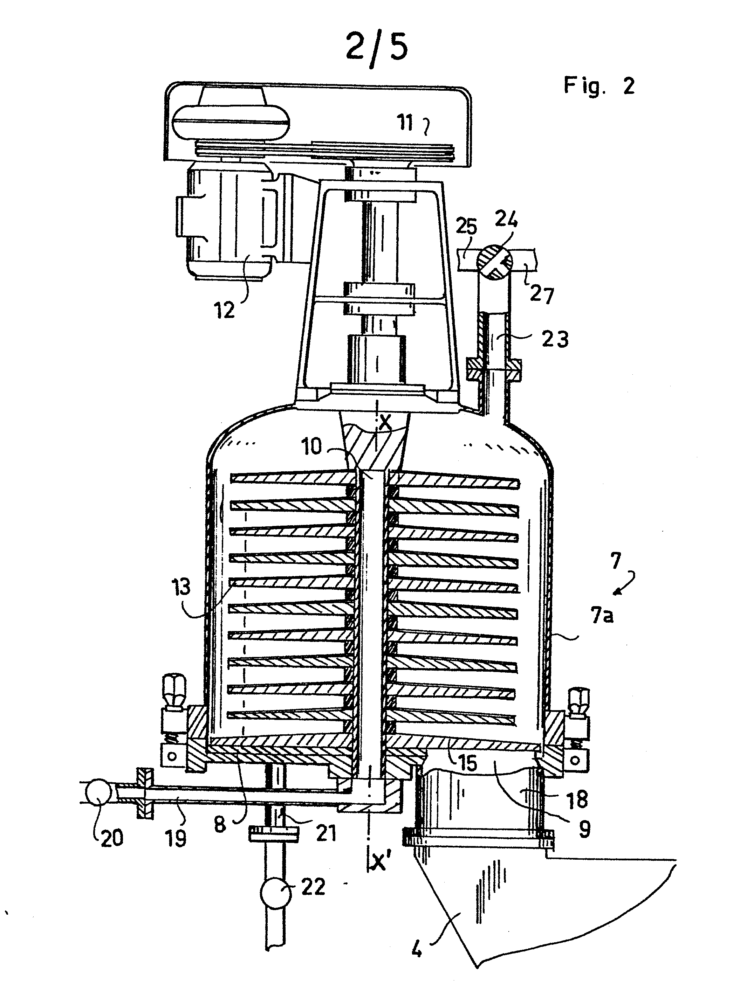

Le long de l'axe vertical XX', s'étend un arbre tubulaire 10 qui est monté rotatif et peut être entraîné par l'entremise de moyens de transmission classiques 11 par un moteur électrique 12 ; ces moyens et ce moteur sont adaptés de façon à permettre d'ajuster la vitesse de rotation de l'arbre 10 dans une plage s'étendant entre 10 et 120 tours/mn (pour simplifier la figure 2, les roulements qui guident en partie basse l'arbre 10 n'ont pas été représentés).

L'arbre 10 porte une série de plateaux superposés 13 séparés entre-eux à la partie centrale par des bagues-entretoises 14. Le pourtour circulaire de chaque plateau est situé en regard et à une certaine distance de la paroi cylindrique 7a de l'enceinte 7. En partie basse, l'arbre 10 porte un racleur 15 qui est apte à tourner avec lui et s'étend sur tout le diamètre de l'enceinte, contre la paroi inférieure 8.

Chaque plateau 13 porte sur sa face supérieure un jeu de rainures radiales 13a et circulaires concentriques 13b ; les rainures radiales 13a sont obturées au voisinage du pourtour circulaire du plateau et, au contraire, débouche à la partie centrale à l'intérieur de l'arbre creux 10 à travers des lumières 10a que comporte celui-ci.

Chaque plateau 13 est surmonté par une toile filtrante 16 qui est fixée autour de celui-ci par un cerclage 17 et est pincée au centre par les bagues-entretoises 14. En l'exemple, les plateaux sont conformés de sorte que les toiles filtrantes 16 soient très légèrement inclinées vers leur périphérie.

L'arbre creux 10 débouche en partie basse dans un conduit 19 d'évacuation du filtrat, pourvu d'une vanne 20. En outre, la paroi inférieure 8 de l'enceinte est percée d'une lumière entourée par un conduit de vidange 21 qui permet d'évacuer, à chaque séquence, le reliquat liquide contenu dans l'enceinte ; ce conduit est pourvu d'une vanne 22.

De plus, l'enceinte 7 comporte en partie haute un conduit 23 doté d'une vanne trois voies 24 qui permet, soit d'admettre dans l'enceinte les barbotines sous pression arrivant par un conduit 25 associé à une pompe 26 (pression comprise entre 10 et 20 bars), soit d'injecter dans ladite enceinte de l'air comprimé (en particulier air chaud sec comme on le verra plus loin) arrivant par un conduit 27 (pression d'air comprise entre 1 et 10 bars).

Par ailleurs, le dispositif de démottage 3 vers lequel les mottes sont envoyées à la sortie des dispositifs de filtration 1 et 2, comprend une enceinte cylindrique 28 d'axe incliné qui est ouverte à sa partie supérieure 28a et est fixée par des brides à la base de la trémie 4.

Cette enceinte est dotée latéralement d'une goulotte 29 d'évacuation de particules.

Elle contient une cuve cylindrique 30, agencée le long du même axe incliné et portée en partie basse par l'arbre de sortie 31 d'un moteur électrique 32. Ce moteur est adapté pour permettre de régler la vitesse de rotation de la cuve dans une plage s'étendant entre 1000 et 3000 tours/mn.

La cuve 30 est portée par l'arbre 31 par l'entremise d'une paroi inférieure qui la ferme, au moyen d'un montage classique. Ladite cuve, ouverte sur sa face supérieure, est dotée sur sa surface cylindrique d'une multitude de trous calibrés tels que 30a à travers lesquels sont appelées à passer les mottes, en vue d'engendrer leur division en particules.

A cet effet, trois racleurs fixes sont associés à ladite cuve le long de trois génératrices de celle-ci ; deux racleurs 33 et 34 sont disposés à l'intérieur de la cuve tournante de façon à forcer la matière (plaquée contre la surface interne de la cuve par effet centrifuge) à passer au travers des trous de celle-ci, cependant qu'un racleur 35 est disposé à l'extérieur de la cuve, légèrement en aval de la goulotte d'évacuation 29 (par rapport au sens de rotation de la cuve), de façon à assurer le détachement complet des particules ayant traversé les trous 30a.

La goulotte 29 qui reçoit ces particules, les déverse dans la goulotte 6 déjà évoquée, laquelle les dirige vers le dispositif de granulation 5.

Ce dispositif de granulation comprend une enceinte cylindrique 36 de forme allongée et d'axe YY' incliné par rapport à l'horizontale d'environ 20°. Cette enceinte en acier imperméable aux ondes hyperfréquences est montée rotative autour de son axe YY', grâce à deux bandages externes tels que 37 qui reposent sur des rouleaux 38 montés tournant par l'entremise de paliers 39, autour d'axes parallèles à l'axe YY'. L'enceinte 36 est extérieurement équipée d'une roue dentée 40 en prise avec un pignon de sortie d'un moto-réducteur 41. La roue 40, son pignon d'entraînement et le moto-réducteur sont adaptés pour permettre d'ajuster la vitesse de rotation de l'enceinte dans une plage s'étendant entre environ 5 et 30 tours/mn.

L'enceinte 36 comprend intérieurement un tambour tubulaire 42 qui présente un diamètre inférieur à celle-ci et s'étend autour du même axe le long de ladite enceinte. Ce tambour comporte un tronçon inférieur 42a de diamètre plus réduit.

Le tambour 42 est réalisé en un matériau transparent ou peu absorbant à l'égard des ondes électromagnétiques hyperfréquences, en particulier, verre, polytétrafluoroéthylène, chlorure de polyvinyle...

Il est fixé dans l'enceinte grâce à une chicane 43 qui forme entretoise et présente la forme d'une spirale enroulée entre l'enceinte et le tambour depuis la partie haute jusqu'à la partie basse du dispositif. Cette chicane délimite ainsi pour les granulés un parcours en spirale entre l'enceinte et le tambour.

En outre, le tambour 42 comporte intérieurement dans son tronçon inférieur 42a des chicanes 44 destinées à engendrer des turbulences dans le flux d'air.

Le tambour 42 est percé d'une multitude de trous calibrés tels que 42b de diamètre supérieur à ceux de la cuve 30 du dispositif de démottage.

En partie basse, l'enceinte 36 s'emboîte dans un boîtier inférieur 45 qui est équipé d'un conduit d'arrivée d'air chaud et sec 46. Une goulotte 47 d'évacuation des granulés est assujettie audit boîtier ; cette goulotte reçoit les granulés après passage à travers une tôle perforée qui prolonge l'enceinte 36 ; elle les envoie vers un convoyeur 48 destiné à les acheminer vers des postes de traitement ultérieurs. Les produits éventuellement mal formés ou de calibres non conformes sont évacués pour recyclage par une goulotte 49.

En partie haute, l'enceinte 36 s'emboîte dans un boîtier supérieur 50 qui est équipé d'un conduit 51 d'aspiration d'air. La goulotte 6 déjà évoquée traverse le boîtier 50 de façon à déverser les particules dans le tambour 42 qui est ouvert à sa face supérieure 42c.

En outre, un générateur d'ondes hyperfréquences 52 est disposé au voisinage de ce boîtier 50 et est équipé d'un applicateur 53 qui traverse le boîtier 50 et se poursuit dans la partie haute du tambour 42 parallèlement à l'axe de celui-ci. Cet applicateur est constitué par un guide d'onde adapté pour irradier le volume intérieur de l'enceinte 36. La puissance du générateur 52 peut être de l'ordre de quelques kilowatts, en particulier réglable autour d'une valeur de 5 Kwatts.

La structure de l'installation conforme à l'invention ayant été décrite ci-dessus, on va expliquer ci-après son fonctionnement.

Chaque dispositif de filtration 1 ou 2 fonctionne en trois séquences successives.

Dans une première phase, le mélange de barbotine sous pression ayant un taux d'humidité de l'ordre de 50 %, est délivré dans l'enceinte 1 du dispositif, par exemple à une pression de l'ordre de 15 bars. La vanne-guillotine 18 et la vanne d'évacuation 22 sont fermées et l'enceinte se remplit. La vanne 20 est ouverte et le conduit 19 se trouve à la pression atmosphérique : sous l'effet de la différence de pression, le liquide filtre à travers les toiles filtrantes 16 des plateaux ; le filtrat est évacué par l'arbre tubulaire 10 (à l'état immobile).

Un dépôt d'épaisseur croissante se produit sur les toiles filtrantes.

La seconde phase du procédé est mise en oeuvre au bout d'un certain temps qui peut être de l'ordre de 15 à 30 mn pour correspondre à un dépôt d'épaisseur de l'ordre de 5 à 15 mm.

Dans cette seconde phase, on arrête l'arrivée de barbotine en tournant la vanne 24 de façon à admettre l'air comprimé sec provenant du conduit 27. Cet air comprimé sec est en particulier admis à une pression comprise entre 1 et 10 bars et à une température comprise entre 30° C et 60° c. La vanne 22 est ouverte et le reliquat liquide de l'enceinte s'évacue par le conduit 21 ; l'air comprimé accélère cette expulsion.

Dans une troisième phase, lorsque l'enceinte s'est entièrement vidée de liquide, on met en marche le moteur 12 pour faire tourner les plateaux 13 et les racleurs 15, cependant que la vanne-guillotine 18 est ouverte.

Les dépôts présents sur les plateaux 13 sont projetés par effet centrifuge contre les parois cylindriques 7a de l'enceinte 7 et se brisent pour retomber en partie basse sous la forme de mottes. L'air comprimé sec et chaud aide cette expulsion des dépôts et accentue la déshydratation de ceux-ci.

Les conditions de mise en oeuvre des trois phases ci-dessus décrites sont adaptées dans le cas des barbotines, de sorte que le taux d'humidité des mottes soit en sortie de l'ordre de 16 à 20 % ; ce taux est obtenu aisément dans la pratique en réglant les paramètres d'entrée de l'air comprimé sec et chaud à l'intérieur des plages sus-évoquées et adaptant de façon appropriée la durée de la première phase.

Ce taux d'humidité est légèrement inférieur à celui qui correspond à la limite de plasticité des pâtes céramiques (de l'ordre de 20 à 21 %). Ainsi, les mottes deviennent plus friables au-dessous de cette limite et se prêtent par la suite à une division plus facile, sans risque élevé de ré-agglomération. Il est à noter qu'il convient que les mottes demeurent assez proches de cette limite de plasticité pour permettre leur mise en forme sphéroïde dans les phases suivantes.

Les dispositifs en parallèle 1 et 2 travaillent en séquences alternées : la première phase s'accomplit pour l'un deux, alors que les deuxième et troisième phases s'accomplissent pour l'autre. Un débit à peu près continu de mottes est ainsi envoyé vers le dispositif de démottage 3.

Les mottes chassées des dispositifs de filtration 1 et 2 sont traitées dans une quatrième phase dans ledit dispositif de démottage 3. Elles arrivent dans la cuve tournante 30 et sont amenées par l'effet combiné de la force centrifuge et des racleurs à passer au-travers des trous calibrés de cette cuve.

Elles ressortent de celle-ci sous forme de particules plus ou moins allongées et parviennent dans le dispositif de granulation où elles sont traitées dans une cinquième phase.

Au cours de cette cinquième phase, les particules roulent dans le tambour tournant 42 qui est le siège d'un flux d'air turbulent circulant à contre-courant par rapport au sens de circulation des particules. La forme de celles-ci se régularise et devient sphéroïde ; elles passent ensuite à travers les trous calibrés du tambour 42 et roulent entre celui-ci et l'enceinte dans l'espace en forme de spirale délimité par la chicane 43.

Les particules parviennent au bas de l'enceinte avec des formes quasiment sphériques et un taux d'hydratation réduit par l'effet combiné du rayonnement électromagnétique hyperfréquence(irradié par l'applicateur 53)et du flux d'air chaud et sec circulant à contre-courant.

La température de ce flux d'air est ajustée dans une plage s'étendant entre 60 et 120° ; ce réglage et celui de puissance électromagnétique irradiée permettent d'obtenir en sortie des granulés de taux d'humidité désiré, compris entre 16 % et 6 %.

Il est à noter que, pour éviter des pertes d'air chaud, la circulation d'air est engendrée par aspiration de façon que l'enceinte et le tambour demeurent en légère dépression par rapport à l'extérieur.

Le procédé ci-dessus évoqué peut être automatisé grâce à une commande automatique des diverses vannes. Il permet de déshydrater les barbotines et de les transformer en granulés sphériques dans de remarquables conditions d'économie, aussi bien sur le plan de la main-d'oeuvre que sur celui de la consommation énergétique.

REVENDICATIONS

1/ - Procédé de déshydratation et de transformation en granulés d'un mélange d'eau et de pâte, caractérisé en ce qu'il consiste :

(a) dans une première phase, à délivrer le mélange sous pression dans une enceinte (7) et à le filtrer par passage à travers des surfaces filtrantes (16) en assurant une évacuation du filtrat, en vue de produire un dépôt pâteux sur lesdites surfaces filtrantes,

(b) dans une deuxième phase, à arrêter l'arrivée du mélange dans l'enceinte (7) et à évacuer le reliquat liquide contenu dans celle-ci,

(c) dans une troisième phase, à faire tourner les surfaces filtrantes (16) dans des conditions propres à projeter par effet centrifuge les dépôts pâteux contre des parois (7a) de l'enceinte en vue de les transformer en fragments ou mottes,

(d) dans une quatrième phase, à admettre lesdites mottes à l'intérieur d'une cuve (30), tournant sur elle-même et percée de trous (30a), et à les forcer à traverser lesdits trous de façon à recueillir à l'extérieur de la cuve des particules,

(e) dans une cinquième phase, à amener lesdites particules à rouler à l'intérieur d'au moins une surface tubulaire inclinée (36, 42), tournant autour de son axe et parcourue par un flux d'air, puis à recueillir les granulés obtenus en partie basse de ladite surface tubulaire.

2/ - Procédé selon la revendication 1, caractérisé en ce que, dans la phase (a), le mélange est filtré à travers plusieurs surface filtrantes (16) superposées sensiblement horizontales, le filtrat cheminant radialement vers un axe central vertical par lequel il est évacué.

3/ - Procédé selon l'une des revendications 1 ou 2, caractérisé en ce que, au cours de la phase (a), le mélange est délivré dans l'enceinte (7) à une pression approximativement comprise entre 10 et 20 bars.

4/ - Procédé selon l'une des revendications 1, 2 ou 3, caractérisé en ce que, au cours des phases (b) et (c), on injecte dans l'enceinte (7) de l'air comprimé chaud et sec.

5/ - Procédé selon la revendication 2, caractérisé en ce que, au cours de la phase (c), les dépôts pâteux sont projetés contre une paroi sensiblement verticale (7a) située autour des surfaces filtrantes, les mottes étant recueillies par raclage à la base de l'enceinte pour être acheminées vers la cuve tournante.

6/ - Procédé selon l'une des revendications 1, 2, 3, 4 ou 5, caractérisé en ce que, au cours de la phase (d), les mottes sont repoussées à travers les trous (30a) par raclage de la surface interne de la cuve tournante (30) et sont extraites extérieurement sous formes de particules par raclage de la surface extérieure de ladite cuve tournante.

7/ - Procédé selon l'une des revendications 1, 2, 3, 4, 5 ou 6, caractérisé en ce que, au cours de la phase (e), le flux d'air constitué par un flux d'air chaud et sec/ est amené à circuler à contre-courant des granulés depuis la base de la surface tubulaire vers sa partie haute.

8/ - Procédé selon l'une des revendications 1, 2, 3, 4, 5, 6 ou 7, caractérisé en ce que, au cours de la phase (e), l'on irradie au moyen d'un rayonnement électromagnétique hyperfréquence les granulés à l'intérieur de la surface tubulaire.

9/ - Procédé selon l'une des revendications précédentes, pour la déshydratation et la transformation en granulés de barbotines constituées par un mélange d'eau et de pâte céramique, caractérisé en ce que les phases (a), (b) et (c) sont engendrées de façon à obtenir au terme de ces phases des mottes présentant un taux d'humidité (rapport pondéral liquide/matières sèches) sensiblement compris entre 16 et 20 %.

10/ - Procédé selon la revendication 9 et l'une des revendications 7 ou 8, caractérisé en ce que le flux d'air chaud et/ou le rayonnement hyperfréquence sont engendrés de façon à obtenir des granulés présentant un taux d'humidité final compris entre 6 % et 16 %.

11/ - Installation de déshydratation et de transformation en granulés d'un mélange d'eau et de pâte, en particulier barbotine de céramique, caractérisée en ce qu'elle comprend, en combinaison :

- au moins un dispositif de filtration (1, 2) composé d'une enceinte fermée (7) d'axe approximativement vertical (XX') dotée d'une paroi inférieure (8), de plateaux superposés à toile filtrante (13, 16) montés rotatifs autour d'un axe sensiblement vertical (XX'), de moyens (10, 11, 12) d'entraînement en rotation desdits plateaux, de moyens (23, 24, 25) d'admission sous pression du mélange dans l'enceinte, de moyens (10, 19, 20) d'évacuation du filtrat par le centre des plateaux, d'au moins un racleur tournant (15) appliqué contre la paroi inférieure (8), de moyens (9, 18) d'évacuation des mottes, situés en partie basse de l'enceinte, et de moyens (21, 22) d'évacuation du reliquat liquide, situés en partie basse de l'enceinte,

- un dispositif (3), dit de démottage, composé d'une enceinte (28), d'une cuve (30) montée rotative à l'intérieur de ladite enceinte et percée de trous (30a), de moyens (31, 32) d'entraînement en rotation de ladite cuve, de moyens (28a) d'admission des mottes dans la cuve, d'au moins un racleur fixe (33, 34) appliqué contre la surface interne de la cuve, d'au moins un racleur fixe (35) appliqué contre la surface externe de la cuve et de moyens (29) d'évacuation des particules de l'enceinte,

- des moyens (4) d'acheminement des mottes entre les moyens d'évacuation du dispositif de filtration (1, 2) et les moyens d'admission du dispositif de démottage (3),

- un dispositif (5), dit de granulation, composé d'une enceinte (36) d'axe incliné (YY') et de forme allongée le long de cet axe, d'un tambour de forme allongée (42) disposé à l'intérieur de ladite enceinte et percé de trous (42b), de moyens (40, 41) d'entraînement en rotation de l'enceinte et du tambour autour de l'axe incliné, de moyens (42c) d'admission des particules dans ledit tambour en partie haute de celui-ci, d'une goulotte (47) d'évacuation des granulés en partie basse de l'enceinte, des moyens (46) d'arrivée d'air en partie basse de l'enceinte et des moyens (51) d'aspiration d'air en partie haute de celle-ci,

0127202

- des moyens (6) d'acheminement des particules entre les moyens d'évacuation du dispositif de démottage (3) et les moyens d'admission du dispositif de granulation (5).

12/ - Installation selon la revendication 11, caractérisée en ce que :

- les moyens d'entraînement en rotation du dispositif de filtration (1, 2) sont adaptés pour permettre un entraînement des plateaux à des vitesses comprises entre 10 et 120 tours/mn,

- les moyens d'entraînement en rotation du dispositif de démottage (3) sont adaptés pour permettre un entraînement de la cuve à des vitesses comprises entre 1000 et 3000 tours/mn,

- les moyens d'entraînement en rotation du dispositif de granulation (5) sont adaptés pour permettre un entraînement du tambour à des vitesses comprises entre 5 et 30 tours/mn.

13/ - Installation selon l'une des revendications 11 ou 12, caractérisée en ce qu'elle comprend deux dispositifs de filtration (1, 2) disposés en parallèle.

14/ - Dispositif de filtration d'un mélange d'eau et de pâte, en particulier barbotine de céramique, caractérisé en ce qu'il comprend une enceinte cylindrique d'axe approximativement vertical (7), fermée par une paroi inférieure (8), des plateaux superposés (13) à toile filtrante (16), montés rotatifs autour d'un axe sensiblement vertical, des moyens (10, 11, 12) d'entraînement en rotation desdits plateaux, des moyens (23) d'admission du mélange dans l'enceinte, des moyens (10, 12) d'évacuation du filtrat par le centre des plateaux, au moins un racleur (15) tournant avec les plateaux et appliqué contre la paroi inférieure (8) de l'enceinte, des moyens (9, 18) d'évacuation des mottes situés en partie basse de l'enceinte et des moyens (21) d'évacuation du reliquat liquide situés en partie basse de l'enceinte.

15/ - Dispositif de filtration selon la revendication 14, caractérisé en ce qu'il comprend des moyens (23, 24, 27) d'injection d'air à l'intérieur de l'enceinte.

16/ - Dispositif de granulation pour assurer un séchage et une mise en forme sphéroïde de particules de pâte, caractérisé en ce qu'il comprend une enceinte cylindrique (36) d'axe incliné et de forme allongée le long de cet axe, un tambour tubulaire (42) disposé à l'intérieur de ladite enceinte et percé de trous (42b), des moyens (40, 41) d'entraînement en rotation de ladite enceinte et dudit tambour, des moyens (46) d'arrivée d'air en partie basse de l'enceinte des moyens (51) d'aspiration d'air en partie haute de celle-ci, des moyens (42c) d'admission des particules dans le tambour en partie haute de celui-ci, et d'une goulotte (47) d'évacuation des granulés en partie basse de l'enceinte.

17/ - Dispositif de granulation selon la revendication 16, caractérisé en ce que son tambour (42) est en un matériau transparent ou peu absorbant à l'égard des ondes électromagnétiques hyperfréquence, et en ce qu'il comprend un générateur d'ondes hyperfréquences (52, 53) agencé pour irradier le volume intérieur de l'enceinte.

Fig.1

2/5

Fig. 2

Fig. 3

Fig. 4

Fig. 5

G

28₂

28

34

31

32

30

30a

29

Fig. 6

28

33

34

G'

32

Fig. 7

C'

F

28

34

D

33

29

35

C

Fig. 9

Fig.8

5/5

0127202